# FASCICULE DE BREVET EUROPEEN

(11) **EP 2 665 622 B1**
(45) Date de publication et mention de la délivrance du brevet: **16.12.2015**
(21) Numéro de dépôt: 11808194.2
(22) Date de dépôt: 20.12.2011
(51) Int. Cl.: B60R 22/10, B60N 2/28, B60N 2/18, B60R 22/28, B60R 21/207, B60R 21/18

(54) **DISPOSITIF DE PUERICULTURE COMPRENANT DES ELEMENTS DE SECURITE GONFLABLES**
KINDERBETREUUNGSVORRICHTUNG MIT AUFBLASBAREN SICHERHEITSELEMENTEN
CHILDCARE DEVICE INCLUDING INFLATABLE SAFETY ELEMENTS

(30) Priorité: 20.12.2010 FR 1060856; 24.02.2011 FR 1151522
(43) Date de publication de la demande: 27.11.2013
(60) Demande divisionnaire: 15179204.1
(73) Titulaire: Dorel France, 49309 Cholet Cedex (FR)
(72) Inventeur: RENAUDIN, François, F-49300 Cholet (FR); GARNIER, Nicolas, F-49230 Saint Germain Sur Moine (FR)
(74) Mandataire: Vidon Brevets & Stratégie
(86) Numéro de dépôt international: PCT/EP2011/073450
(87) Numéro de publication internationale: WO 2012/084983

(56) Documents cités:
- EP-A2- 1 031 472
- DE-A1- 4 418 028
- GB-A- 2 260 780
- JP-A- 2004 026 156

## Description

Le domaine de l'invention est celui de la puériculture, et plus précisément des dispositifs aptes à recevoir un enfant, notamment en position assise. L'invention concerne en particulier les sièges auto, destinés à être solidarisés à un siège ou une banquette d'un véhicule automobile. Elle peut également être mise en oeuvre dans les dispositifs tels que les poussettes, les nacelles, les sièges pour vélo, etc.

Plus précisément encore, l'invention concerne la mise en oeuvre de coussins, ou ballons, ou encore éléments, de sécurité gonflables, communément appelés « airbag », dont le gonflement est déclenché automatiquement en cas de choc, pour protéger l'enfant installé dans le dispositif de puériculture.

L'usage des « airbags » est bien connu, notamment dans le domaine de l'automobile. Plus récemment, de nombreuses autres applications ont été envisagées, et notamment pour les sièges auto pour enfant. Dans ces derniers, les solutions qui ont été envisagées ne sont toutefois pas totalement satisfaisantes.

On a tout d'abord imaginé de prévoir un coussin frontal, se développant face à l'enfant (sur le modèle de l'airbag installé dans un volant, dans un véhicule). Un inconvénient de cette approche est que ce coussin doit être logé dans l'assise du siège, ou dans une portion protubérante, par exemple un bouclier, à l'avant de cette assise. Le coussin doit donc être de taille importante, et son temps de gonflage est important, ce qui fait que, en cas de choc, la tête de l'enfant est malgré tout déplacée sur une distance trop importante.

Une autre approche proposée consiste à prévoir plusieurs éléments gonflables, répartis dans plusieurs zones du siège, comme illustré par exemple dans le document DE4418028. Notamment, il a été envisagé de prévoir des coussins gonflables sur chacune des bretelles de harnais. Cette technique est malheureusement peu efficace en pratique car, en cas de choc, la tête de l'enfant projetée vers l'enfant passe entre les deux coussins, en les écartant l'un de l'autre.

Des problèmes similaires se rencontrent dans d'autres dispositifs de puériculture.

L'invention a notamment pour objectif de pallier au moins certains de ces inconvénients.

Plus précisément, un objectif de l'invention est de fournir un dispositif de puériculture améliorant la sécurité de l'enfant en cas de choc, de façon simple et efficace.

En particulier, un objectif de l'invention est de fournir un tel dispositif de puériculture permettant d'éviter que le corps, et notamment la tête, de l'enfant soit déplacé sur une grande distance, en cas de choc.

Un autre objectif de l'invention, au moins selon certains modes de réalisation, est de fournir un tel dispositif de puériculture, tenant compte, pour la mise en oeuvre du ou des coussins gonflables, de la taille de l'enfant transporté.

Ces objectifs, ainsi que d'autres qui apparaîtront par la suite sont atteints à l'aide d'un dispositif de puériculture apte à recevoir un enfant, comprenant un harnais présentant deux bretelles destinées à s'étendre à partir des épaules le long du torse d'un enfant, et équipée chacune d'un élément de sécurité gonflable, apte à se gonfler en cas de choc supérieur à un seuil prédéterminé.

Selon l'invention, le dispositif de puériculture comprend des moyens de solidarisation réversibles desdits éléments de sécurité gonflables entre eux.

Ces moyens de solidarisation sont de conçus de façon qu'ils maintiennent lesdits éléments de sécurité l'un contre l'autre, lorsqu'ils sont gonflés. Cette approche permet d'améliorer la sécurité de façon simple et efficace. En effet, en cas de choc, la tête de l'enfant est généralement projetée vers l'avant. Dans ce cas, la tête a tendance à se glisser entre les deux éléments gonflables (ou « airbags ») déployés, et donc à les écarter. Le déplacement du corps, et notamment de la tête, de l'enfant n'est alors pas empêché, et l'efficacité en est fortement réduite.

La présence de ces moyens de solidarisation permet de maintenir les deux éléments gonflables dans la position souhaitée, en les empêchant de s'écarter l'un de l'autre.

Cette approche n'était pas évidente pour l'homme du métier. En effet, rien n'incite à relier l'un à l'autre deux coussins gonflables, alors que l'on cherche en général à ne pas perturber leur déploiement. En outre, selon l'invention, cette solidarisation n'est pas permanente (ce qui empêcherait l'utilisation du harnais, et en particulier l'installation de l'enfant). On prévoit ainsi des moyens de solidarisation réversibles, qui sont solidarisés lorsque l'enfant est installé dans le siège, et désolidarisés pendant l'installation ou le retrait de l'enfant.

Le fait d'associer les coussins gonflables aux bretelles permet par ailleurs de limiter les déplacements du corps, et en particulier de la tête, de l'enfant, le ou les coussins gonflables étant le plus proche possible de celui-ci. De plus, le temps de déploiement des coussins est ainsi limité, et leur taille peut être réduite.

Par ailleurs, la mise en oeuvre de ces éléments gonflables associés aux bretelles est simple à mettre en oeuvre et à utiliser.

Les moyens de solidarisation peuvent par exemple comprendre au moins deux portions souples et portant à leurs extrémités libres des moyens d'accrochage complémentaires, de façon à s'étendre transversalement entre les bretelles, lorsqu'ils sont solidarisés, et à assurer également, de préférence, le maintien des bretelles l'une par rapport à l'autre.

En d'autres termes, ils assurent en outre une fonction, connue en soi, de liaison des deux bretelles (fonction connue sous le nom anglais « chest clip »), qui a pour but d'empêcher l'enfant de passer les bras sous les bretelles. Un avantage de cette approche est que l'utilisateur est incité à mettre en oeuvre cette liaison, dont au moins la fonction « chest clip » est directement apparente. Ainsi, avec une seule liaison, on assure deux opérations, et notamment celles de solidarisation des deux éléments gonflables.

La liaison peut être assurée directement entre ces éléments gonflables, ou via des éléments (bretelles, fourreaux,...) auxquels ils sont solidarisés.

Dans le cas où lesdites bretelles portent chacune un fourreau, mobile en coulissement le long de la bretelle, on peut prévoir que lesdits éléments de sécurité gonflables soient logés dans les fourreaux.

Cette approche présente l'avantage de garantir que les éléments gonflables sont toujours bien placés, quelle que soit la taille de l'enfant. En effet, les fourreaux sont déplacés, en fonction de la taille de l'enfant, pour être toujours placés au moins en partie sur les épaules.

Selon un mode de réalisation particulier, lesdits fourreaux présentent au moins un volet mobile, apte à former un logement pour un desdits éléments de sécurité gonflables.

Chacun desdits éléments de sécurité gonflables peut notamment être fixé à un desdits fourreaux par deux liaisons, respectivement à proximité de chacune des extrémités dudit fourreau.

Ceci permet de mieux contrôler le déploiement des éléments gonflables.

Notamment, lesdits éléments de sécurité gonflables peuvent être fixés auxdits fourreaux par couture. D'autres moyens de fixation adaptés sont bien sûr envisageables.

Selon un mode de réalisation particulier, chacun desdits fourreaux présente une ouverture latérale permettant le passage desdits moyens de solidarisation.

Selon un autre aspect de certains modes de réalisation, lesdits éléments de sécurité gonflables sont configurés de façon à définir, lorsqu'ils sont gonflés, une protection latérale au niveau du cou de l'enfant et l'équivalent d'un coussin central au niveau de la tête de l'enfant, par leurs portions d'extrémité reliées entre elles par les moyens de solidarisation.

Lesdits éléments de sécurité gonflables peuvent être alimentés par au moins une source de fluide, par exemple logée dans le dossier dudit siège.

Selon une première approche, le dispositif de l'invention peut comprendre des moyens mécaniques de déclenchement du gonflage desdits éléments de sécurité gonflables, comprenant au moins un fusible, par exemple monté :
- sur une pince de solidarisation dudit siège auto à un crochet prévu à cet effet dans un véhicule automobile ; et/ou
- sur une sangle de solidarisation de la partie supérieure du dossier, ou d'une embase correspondante, au véhicule automobile, ou sur des moyens solidaires de ladite sangle.

Selon une autre approche, il peut comprendre des moyens électroniques de déclenchement du gonflage desdits éléments de sécurité gonflables, tels qu'au moins un capteur de décélération et/ou un signal de commande délivré par un véhicule dans lequel ledit dispositif est installé.

Plus généralement, le signal de déclenchement du gonflage peut être délivré par tous moyens mécaniques et/ou électroniques, autonomes (associés au dispositif de puériculture) et/ou être délivré par le véhicule.

Selon une autre caractéristique de certains modes de réalisation, le dispositif comprend des moyens de détection de la présence d'un enfant, n'autorisant le gonflement des éléments de sécurité gonflables qu'en présence d'un enfant dans ledit dispositif de puériculture.

En effet, il n'est généralement pas souhaitable que les éléments de sécurité se gonflent, même en cas de choc important (et donc même si des moyens de déclenchement requièrent un tel gonflement, si le dispositif n'est pas occupé. Cette détection peut par exemple être assurée à l'aide d'un capteur de poids placé sous l'assise, ou d'un contact placé de façon adéquate.

Selon un mode de réalisation particulier, lesdits moyens de détection sont formés par ou coopèrent avec lesdits moyens de solidarisation desdits éléments de sécurité gonflables entre eux, et délivrent une information de présence d'un enfant lorsque lesdits moyens de solidarisation sont solidarisés.

Ainsi, il est aisé de déterminer la présence de l'enfant, par exemple via un contact électrique fermé lorsque le « chest clip » est verrouillé. Par ailleurs, l'information est directement disponible à proximité des éléments gonflables.

D'autres caractéristiques et avantages de l'invention apparaîtront plus clairement à la lecture de la description suivante d'un mode de réalisation préférentielle de l'invention, donnée à titre de simple exemple illustratif et non limitatif, et des dessins annexés parmi lesquels :
- la figure 1 illustre un exemple de siège auto selon l'invention ;
- les figures 2A et 2B présentent le siège auto de la figure 1, les éléments gonflables ayant été déployés ;
- la figure 3 présente, à plat et non gonflé, le coussin gonflable mise en oeuvre dans le siège des figures 1 et 2 ;
- la figure 4 montre plus précisément un fourreau destiné au siège des figures 1 et 2, avant mise en place d'un des éléments gonflables ;
- la figure 5 montre le fourreau de la figure 4, après mise en place de l'élément gonflable ;
- la figure 6 présente l'arrière du siège auto des figures 1 et 2, équipée d'une bonbonne permettant le gonflage des éléments gonflables ;
- la figure 7 illustre un premier exemple d'implantation d'un capteur de déclenchement des éléments gonflables, dans une pince Isofix® ;
- la figure 8 illustre un deuxième mode de mise en oeuvre d'un capteur de déclenchement, placé au niveau de la sangle supérieure de têtière.

L'invention propose donc une nouvelle approche des coussins de sécurité gonflables (« airbags ») destinés à équiper des dispositifs de puériculture. Le mode de réalisation décrit par la suite concerne les sièges auto pour enfant. Cependant, l'homme du métier comprend que la même approche peut aisément être adapté à d'autres dispositifs de puériculture, dès lors qu'ils sont équipés d'un harnais.

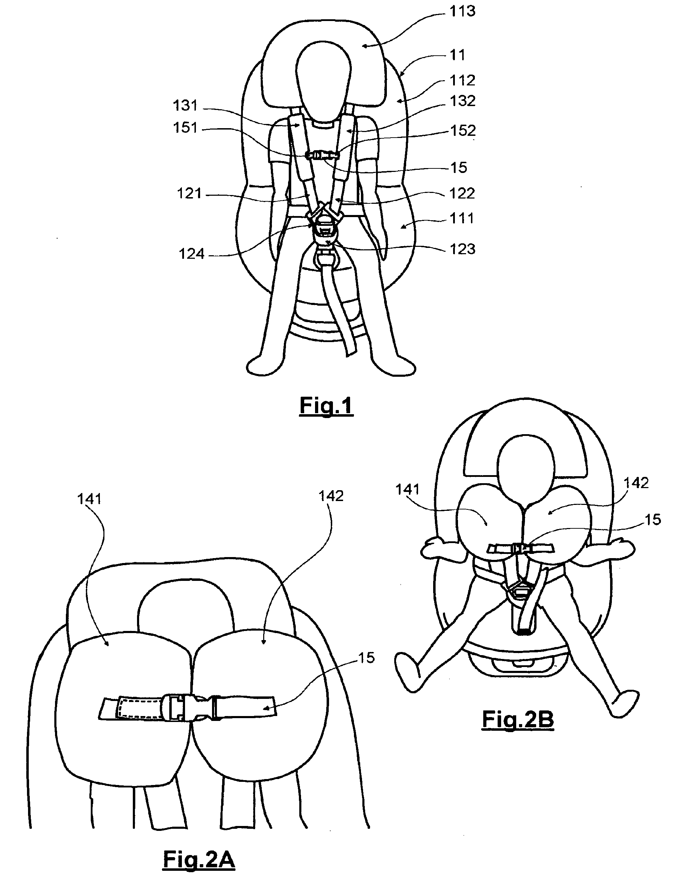

Plus précisément, comme illustré sur les figures 1 et 2, les coussins de sécurité gonflables sont formés de deux éléments gonflables, montés respectivement chacun sur une des bretelles du harnais de maintien de l'enfant, et plus précisément, dans le mode de réalisation décrit, dans les fourreaux équipant ces bretelles..

Selon l'invention, ces deux éléments sont en outre solidarisés entre eux, de façon détachable, par des moyens de solidarisation prévus à cet effet, au niveau ou au voisinage des bretelles. Ces moyens de solidarisation sont montés sur les éléments gonflables, de façon qu'ils restent solidaires, et maintenus l'un contre l'autre lorsqu'ils sont déployés.

Comme on le voit sur la figure 1, le siège auto pour enfant 11 comprend classiquement une assise 111 et un dossier 112, portant ici une têtière 113, qui peut être mobile en hauteur, par rapport au dossier 112.

L'enfant est maintenu dans ce siège 11 à l'aide d'un harnais 12, comprenant deux bretelles 121 et 122, destinées à être placées chacune sur une des épaules de l'enfant, et s'étendant sensiblement verticalement sur le torse de celui-ci, et une patte d'entrejambes 123.

Lorsque le harnais est mis en place, les deux bretelles 121 et 122 et la patte d'entrejambes 123 sont solidarisés par une boucle de verrouillage 124. Chaque bretelle 121 et 122 porte un fourreau 131, 132, venant prendre position sur les épaules et/ou le haut du corps de l'enfant, pour améliorer son confort et sa sécurité.

Ces fourreaux sont généralement réglables en hauteur, par coulissement le long de la bretelle correspondante, de façon à être de placer de façon adaptée au niveau de l'épaule et du torse de l'enfant, en fonction de sa taille.

Dans le mode de réalisation décrit, chacun de ces fourreaux 131 et 132 contient un élément de sécurité gonflable 141, 142 (non visibles sur la figure 1). Les éléments de sécurité gonflables sont pliés et logés dans les fourreaux, de façon à se déployer de façon efficace, en cas de choc.

Dans d'autres modes de réalisation, les éléments de sécurité gonflables peuvent être intégrés directement à chaque bretelle.

Ces éléments de sécurité gonflables 141 et 142 sont par ailleurs reliés par des moyens de solidarisation 15, les solidarisant l'un à l'autre, lorsque l'enfant est installé dans le siège.

Ces éléments de solidarisation 15 comprennent, dans le mode de réalisation illustré, deux portions souples, ou lanières, 151 et 152, équipées chacune d'un élément de boucle respectivement mâle et femelle, pouvant s'insérer l'un dans l'autre pour solidariser les deux lanières 151 et 152, et pouvant être séparées l'un de l'autre, par une action manuelle appropriée (choisie de façon que l'enfant installé ne puisse pas désolidariser lui-même ces moyens de solidarisation).

Selon ce mode de réalisation, les moyens de solidarisation 15 assurent également le maintien dans une position suffisamment rapprochée des deux bretelles 121 et 122, lorsqu'un enfant est installé dans le siège (fonction « chest clip » en anglais). Ceci permet de garantir que les bretelles sont bien positionnées, et d'éviter que l'enfant passe un bras sous une des bretelles et/ou retire l'une des bretelles alors que le harnais est bouclé.

Il est possible de prévoir d'autres types de moyens de solidarisation, ou de prévoir plusieurs moyens de solidarisation, et par exemple de jeux de lanières et de boucles, l'un en position supérieure et l'autre en position inférieure des éléments de sécurité, lorsqu'ils sont déployés.

Lors de l'installation de l'enfant, on met donc en place, classiquement, le harnais, en plaçant les bretelles 131 et 132 sur les épaules de l'enfant (le cas échéant, la hauteur de ces bretelles et/ou des fourreaux peut être réglée), puis ces deux bretelles sont solidarisées à la patte d'entrejambe 123, à l'aide de la boucle 124. Ensuite, les moyens de solidarisation 15 sont solidarisés. Le déverrouillage se fait de façon inverse, en désolidarisant les moyens de solidarisation 15, puis en désolidarisant les bretelles 121, 122 et la patte d'entrejambe 123, via la boucle 124.

En cas de choc important, supérieur à un seuil prédéterminé, les deux éléments de sécurité gonflables 141 et 142 se déploient automatiquement et très rapidement, depuis les fourreaux 131 et 132, pour protéger notamment la tête de l'enfant, et limiter sa course vers l'avant, comme illustré sur la figure 2A et 2B. Comme on le voit sur ces figures, les deux éléments de sécurité gonflables 141 et 142 forment l'équivalent d'un coussin unique, du fait qu'ils sont maintenus par les moyens de solidarisation 15. Ainsi, bien que ces deux éléments 141 et 142 soient déployés chacun sur un côté de l'enfant, ils ne s'écartent pas l'un de l'autre, et la tête de l'enfant ne risque pas de continuer sa course entre les deux éléments de sécurité 141 et 142.

On notera que la forme de ces éléments de sécurité 141 et 142 est ici adaptée pour optimiser la protection au niveau du visage, tout en assurant également une bonne protection latérale de la tête et du cou.

Selon d'autres modes de réalisation, les éléments gonflables peuvent également être conçus et placés pour agir, au moins en partie, sur le thorax de l'enfant. D'autres éléments gonflables peuvent par ailleurs être prévus, par exemple dans la structure du siège et/ou dans la boucle du harnais).

Dans tous les cas, on comprend que le montage des éléments de sécurité sur les bretelles de harnais, et en particulier dans les fourreaux, dont les positions sont réglables en fonction de la taille de l'enfant, garantit un bon placement des éléments gonflables, lorsqu'ils se déploient, quelle que soit la taille de l'enfant.

Une solidarisation, par exemple par l'intermédiaire d'une couture ou d'un lien sur chaque bretelle du harnais, peut être prévue, pour contrôler la direction de déploiement des éléments gonflables, et éviter notamment qu'il se déploie vers le haut de façon trop importante.

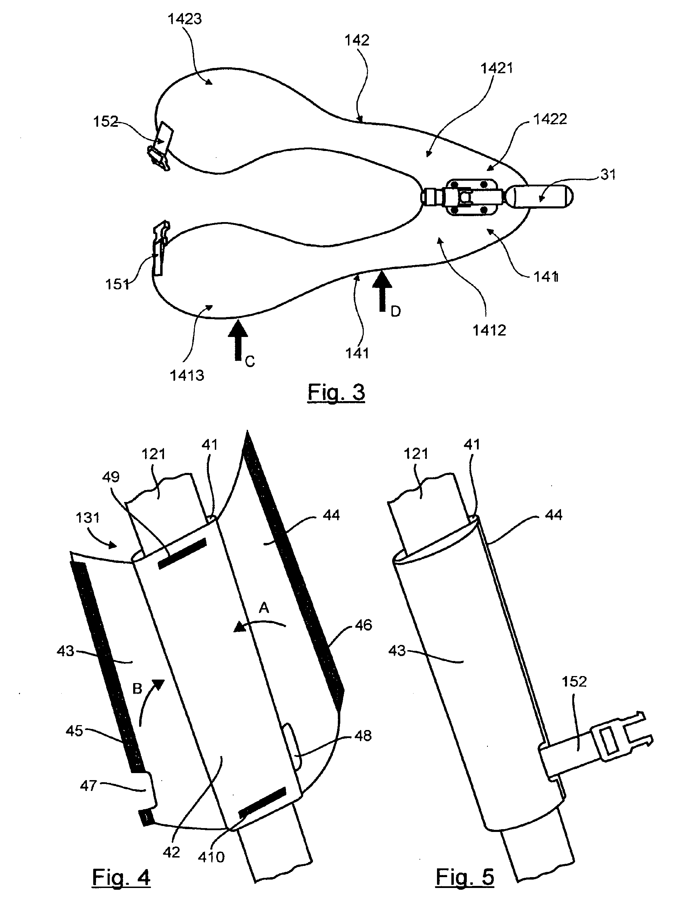

La figure 3 présente un mode de réalisation des éléments de sécurité gonflables, présentés à plat et non gonflés. Les deux éléments de sécurité gonflables 141 et 142 sont alimentés, via une première extrémité 1421, 1411 par une bonbonne d'un fluide adapté (non représentée) connectée à une entrée d'alimentation 31.

Les deux éléments de sécurité se poursuivent par une portion intermédiaire 1412, 1422, destinée à se déployer essentiellement autour du cou de l'enfant, et se terminent par deux portions d'extrémités 1413 1423, plus volumineuses, qui se déploieront devant la tête de l'enfant. Ces deux extrémités 1413 et 1423 sont équipées des moyens de solidarisation 151 et 152.

Dans le mode de réalisation illustré, les deux éléments de sécurité 141 et 142 sont des parties d'un même coussin gonflable. Selon un autre mode de réalisation, il peut s'agir de deux éléments gonflables indépendants.

Ces éléments de sécurité gonflables 141 et 142 sont, dans le mode de réalisation illustré, logés dans les fourreaux 131 et 132, dans un logement tel qu'illustré sur les figures 4 et 5. La figure 4 montre le fourreau ouvert, pour recevoir l'élément gonflable (non encore installé). La figure 5 présente le fourreau fermé, c'est-à-dire dans sa position d'utilisation habituelle (en l'absence de choc entraînant le déploiement de l'élément gonflable), l'élément gonflable étant plié (et non visible) dans son logement.

Ce mode de réalisation est avantageux, car les fourreaux sont mobiles le long des bretelles, et toujours placés en partie supérieure du corps de l'enfant, au niveau ou au voisinage de ses épaules (des techniques ont d'ailleurs été proposées par ailleurs, pour contrôler le bon positionnement des fourreaux). Ainsi, quelle que soit la taille de l'enfant, les éléments de sécurité se déploient de façon optimisée, au niveau du cou et du visage de celui-ci.

Dans un autre mode de réalisation, les éléments de sécurité gonflables peuvent être placés sur le harnais et configurés sensiblement plus bas, au niveau du thorax de l'enfant. Ils se déploient alors sensiblement en dessous de la tête de l'enfant. On augmente alors la surface de contact du corps de l'enfant avec ces éléments gonflables, tout en empêchant un déplacement important de la tête, sans nécessiter un volume gonflé très important.

Selon d'autres modes de réalisation, cependant, les éléments de sécurité peuvent être logés dans le harnais, ou dans une pièce spécifique rapportée sur celui-ci. Préférentiellement, des moyens de solidarisation sont prévus, pour les relier l'un à l'autre. Cette liaison peut être réalisée directement entre les éléments gonflables, ou indirectement, au niveau des bretelles ou des fourreaux. Dans ce dernier cas, les éléments gonflables peuvent être solidarisés aux bretelles ou aux fourreaux, par exemple par couture et/ou insertion dans un logement.

Dans le mode de réalisation de la figure 4, un logement spécifique est prévu dans le fourreau, pour recevoir l'élément de sécurité gonflable (dans une version simplifiée, l'élément gonflable peut être simplement inséré entre le fourreau et la bretelle).

Le fourreau comprend donc, classiquement, une zone 41 de circulation de circulation de la bretelle 121. En outre, un logement est défini pour l'élément gonflable 141, formé ici par un fond 42 et deux volets souples 43, 44, se rabattant l'un sur l'autre (successivement flèches A et B). Dans un autre mode de réalisation, un seul volet peut être prévu.

Le ou les volets peuvent être solidarisés entre eux et/ou avec une autre partie du harnais avec celui-ci par des boutons-pression, des moyens de maintien du type Velcro® 45, 46, une couture, un collage, ... Ces différents moyens sont choisis de façon à être fusibles, c'est-à-dire qu'ils cèdent lorsque les éléments gonflables se gonflent, sans s'opposer au déploiement de ceux-ci.

Ainsi, lorsque les coussins gonflables se déploient, la pression est suffisante pour désolidariser les volets, et permettre le déploiement des deux éléments de sécurité 141, 142.

Les volets présentent des découpes ou des ouvertures 47, 48, permettant le passage des moyens de solidarisation 151 ou 152.

Une couture de l'élément gonflable, ou un autre type de solidarisation, sur le harnais ou le fourreau peut être prévue, de façon à mieux contrôler, si nécessaire, le déploiement des éléments gonflables dans la direction souhaitée.

Notamment, chaque élément gonflable est avantageusement relié au fourreau par deux coutures 49, 410 (non fusibles, c'est-à-dire de solidité suffisante pour ne pas céder lors du déploiement de l'élément gonflable), situées respectivement en partie supérieure (au niveau de l'épaule de l'enfant) et en partie inférieure (au niveau du torse de l'enfant). Ces coutures 49, 410 correspondent sensiblement, respectivement, aux emplacements des flèches C et D (figure 3) sur l'élément gonflable.

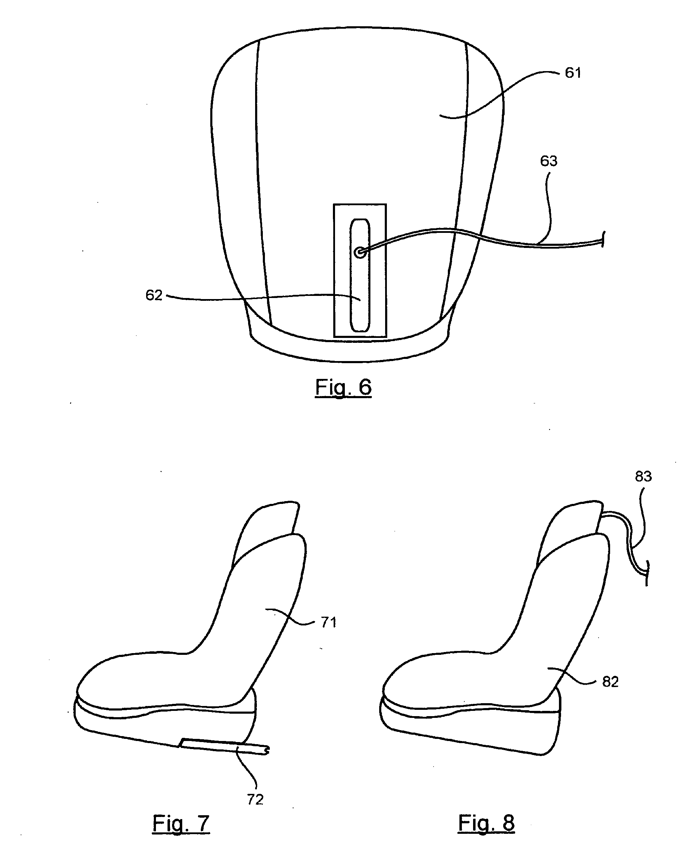

Comme illustré sur la figure 6, les moyens de gonflage des éléments de sécurité peuvent être logés dans le dossier 61 du siège. Ils comprennent une bonbonne 62, contenant un fluide adapté pour permettre le gonflement immédiat des deux éléments de sécurité. Ce fluide peut notamment être un gaz tel que l'hélium, l'azote ou le gaz carbonique.

Cette bonbonne 62 est placée dans un logement prévu à cet effet. Ce logement peut, selon les cas, être placé dans le dossier, l'assise ou l'embase du siège auto, à tout emplacement adéquat. Un tube 63 est relié à l'entrée d'alimentation de fluide 31 (figure 3).

Le déclenchement du gonflage ne doit bien sur se faire qu'en cas de choc suffisamment important. Un seuil prédéterminé adapté est donc défini.

Plusieurs méthodes de détection de ce seuil peuvent être prévues. Par exemple, comme illustré sur la figure 7, dans le cas d'un siège auto 71 équipé de pinces Isofix® 72 permettant de solidariser le siège auto 71 à des anneaux prévus à cet effet dans le siège du véhicule, ce déclenchement peut être assuré par l'intermédiaire d'un fusible mécanique (non représenté), directement lié ou intégré à l'une et/ou l'autre des pinces Isofix® 72. En effet, la pince est soumise à un déplacement lors d'un choc ou d'un accident, que l'on peut exploiter pour commander le déclenchement.

Selon une autre approche, illustrée par la figure 8, dans le cas d'un siège 82, équipé d'une sangle 83 montée en partie supérieure du dossier (ou de l'embase du siège), et destiné à être relié à un élément d'accrochage dans le véhicule (sangle dite sangle de « top tether » en anglais), le déclenchement peut être assuré à l'aide d'un fusible lié directement à cette sangle 83, ou à des moyens d'accrochage de celle-ci, au niveau du dossier ou de l'embase. A nouveau, il est ainsi possible d'exploiter le déplacement de la portion supérieur du siège, lors d'un choc ou d'un accident.

Par ailleurs, il n'est généralement pas souhaitable que les éléments de sécurité se gonflent, même en cas de choc important (et donc même si des moyens de déclenchement requièrent un tel gonflement, si le siège n'est pas occupé par un enfant.

Divers moyens de détection de présence sont déjà connus. Ainsi, cette détection peut par exemple être assurée à l'aide d'un capteur de poids placé sous l'assise, ou d'un contact placé de façon adéquate, par exemple dans le dossier ou l'assise.

Selon une approche particulière, ces moyens de détection sont formés par ou coopèrent avec les lanières 151 et 152, et délivrent une information de présence d'un enfant lorsque les moyens de solidarisation sont solidarisés.

Ainsi, il est aisé de déterminer la présence de l'enfant, par exemple via un contact électrique fermé lorsque le « chest clip » est verrouillé. L'information est directement disponible à proximité des éléments gonflables, et peut être combinée, par exemple via un ET logique dans les moyens de déclenchement, à un signal délivré par un fusible détectant un choc supérieur au seuil prédéterminé.

Dans le mode de réalisation décrit ci-dessus, le siège auto est équipé d'un harnais de type « 5 points ». Bien entendu, l'invention peut s'appliquer à d'autres types de harnais, dès lors que deux sangles de celui-ci peuvent recevoir deux éléments de sécurité gonflables. Par ailleurs, l'invention ne s'applique pas uniquement au siège auto, mais peut également être mise en oeuvre dans d'autres dispositifs de puériculture, tels que les poussettes, les nacelles, ...

## Revendications

1. Dispositif de puériculture apte à recevoir un enfant, comprenant un harnais (12) présentant deux bretelles (121, 122) destinées à s'étendre à partir des épaules le long du torse d'un enfant,
chacune des bretelles (121, 122) étant équipée d'un élément de sécurité gonflable (141, 142), apte à se gonfler en cas de choc supérieur à un seuil prédéterminé, **caractérisé en ce qu'**il comprend des moyens de solidarisation réversibles (15) desdits éléments de sécurité gonflables (141, 142) entre eux.

2. Dispositif de puériculture selon la revendication 1, **caractérisé en ce que** lesdits moyens de solidarisation (15) comprennent au moins deux portions souples (151, 152) fixés par une première de leurs extrémités respectivement à l'un et l'autre desdits éléments gonflables, et portant à leurs secondes extrémités des moyens d'accrochage complémentaires, conçus de façon à s'étendre transversalement entre les bretelles (121, 122), lorsqu'ils sont solidarisés.

3. Dispositif de puériculture selon la revendication 2, **caractérisé en ce que** lesdites portions souples assurent également, lorsque leurs moyens d'accrochage sont solidarisés, un maintien des bretelles l'une par rapport à l'autre.

4. Dispositif de puériculture selon l'une quelconque des revendications 1 à 3, **caractérisé en ce que** lesdits éléments de sécurité gonflables (141, 142) sont logés dans le harnais ou dans une pièce spécifique rapporté sur celui-ci.

5. Dispositif de puériculture selon l'une quelconque des revendications 1 à 3, **caractérisé en ce que** lesdites bretelles (121, 122) portent chacune un fourreau (131, 132), mobile en coulissement le long de la bretelle, et **en ce que** lesdits éléments de sécurité gonflables (141, 142) sont logés dans lesdits fourreaux (131, 132).

6. Dispositif de puériculture selon la revendication 5, **caractérisé en ce que** lesdits fourreaux (131, 132) présentent au moins un volet mobile (43, 44), apte à former un logement pour un desdits éléments de sécurité gonflables (141, 142).

7. Dispositif de puériculture selon la revendication 6, **caractérisé en ce que** le ou lesdits volets mobiles (43, 44) sont solidarisées entre eux et/ou ave une autre partie du harnais par des moyens (45, 46) choisis de façon à être fusibles, cédant lorsque les éléments gonflables se gonflent, sans s'opposer au déploiement de ceux-ci.

8. Dispositif de puériculture selon l'une quelconque des revendications 5 à 7, **caractérisé en ce que** chacun desdits éléments de sécurité gonflables (141, 142) est fixé à un desdits fourreaux (131, 132) par deux liaisons, respectivement à proximité de chacune des extrémités dudit fourreau.

9. Dispositif de puériculture selon l'une quelconque des revendications des revendications 5 à 8, **caractérisé en ce que** lesdits éléments de sécurité gonflables (141,142) sont fixés auxdits fourreaux (131,132) par couture.

10. Dispositif de puériculture selon l'une quelconque des revendications 5 à 9, **caractérisé en ce que** chacun desdits fourreaux (131, 132) présente une ouverture latérale permettant le passage desdits moyens de solidarisation (15).

11. Dispositif de puériculture selon l'une quelconque des revendications 1 à 10, **caractérisé en ce que** lesdits éléments de sécurité gonflables (141, 142) sont configurés de façon à définir, lorsqu'ils sont gonflés, une protection latérale au niveau du cou de l'enfant et l'équivalent d'un coussin central au niveau de la tête de l'enfant, par leurs portions d'extrémité reliées entre elles par les moyens de solidarisation (15).

12. Dispositif de puériculture selon l'une quelconque des revendications 1 à 11, **caractérisé en ce que** lesdits éléments de sécurité gonflables (141, 142) sont placés sur ledit harnais et configurés au niveau du thorax de l'enfant, pour se déployer sensiblement en dessous de la tête de l'enfant.

13. Dispositif de puériculture selon l'une quelconque des revendications 1 à 12, **caractérisé en ce qu'**une solidarisation de chaque élément de sécurité gonflable (141, 142) à la bretelle de harnais qui le porte, par exemple par l'intermédiaire d'une couture ou d'un lien, est prévue, pour contrôler la direction de déploiement desdits éléments gonflables.

14. Dispositif de puériculture selon l'une quelconque des revendications 1 à 13, **caractérisé en ce que** lesdits éléments de sécurité gonflables (141, 142) sont des parties d'un même coussin gonflable.

15. Dispositif de puériculture selon l'une quelconque des revendications 1 à 13, **caractérisé en ce que** lesdits éléments de sécurité gonflables (141, 142) sont deux éléments gonflables indépendants.

16. Dispositif de puériculture selon l'une quelconque des revendications 1 à 15, **caractérisé en ce que** lesdits éléments de sécurité gonflables (141, 142) sont alimentés par au moins une source de fluide (62).

17. Dispositif de puériculture selon la revendication 16, **caractérisé en ce que** ladite au moins une source de fluide (62) est logée dans le dossier (61), l'assise ou l'embase dudit siège.

18. Dispositif de puériculture selon l'une quelconque des revendications 1 à 17, **caractérisé en ce qu'**il comprend des moyens mécaniques de déclenchement du gonflage desdits éléments de sécurité gonflables (141, 142), comprenant au moins un fusible monté :
- sur une pince (72) de solidarisation dudit siège auto à un crochet prévu à cet effet dans un véhicule automobile ; et/ou
- sur une sangle (83) de solidarisation de la partie supérieure du dossier, ou d'une embase correspondante, au véhicule automobile, ou sur des moyens solidaires de ladite sangle.

19. Dispositif de puériculture selon l'une quelconque des revendications 1 à 18, **caractérisé en ce que** qu'il comprend des moyens électroniques de déclenchement du gonflage desdits éléments de sécurité gonflables (141, 142), tels qu'au moins un capteur de décélération et/ou un signal de commande délivré par un véhicule dans lequel ledit dispositif est installé.

20. Dispositif de puériculture selon l'une quelconque des revendications 1 à 19, **caractérisé en ce qu'**il comprend des moyens de détection de la présence d'un enfant, n'autorisant le gonflement des éléments de sécurité gonflables (141,142) qu'en présence d'un enfant dans ledit dispositif de puériculture.

21. Dispositif de puériculture selon les revendications 2 et 20, **caractérisé en ce que** lesdits moyens de détection sont formés par ou coopèrent avec lesdits moyens de solidarisation (15) desdits éléments de sécurité gonflables (141, 142) entre eux, et délivrent une information de présence d'un enfant lorsque lesdits moyens d'accrochage sont solidarisés.

22. Dispositif de puériculture selon l'une quelconque des revendications 1 à 21, **caractérisé en ce qu'**il s'agit d'un siège auto pour enfant.

23. Dispositif de puériculture selon l'une quelconque des revendications 1 à 21, **caractérisé en ce qu'**il appartient au groupe comprenant :
- les poussettes ;
- les nacelles ;
- les sièges pour vélo.

## Patentansprüche

1. Kleinkindpflegevorrichtung, die ein Gurtsystem (12) mit zwei Schultergurten (121, 122) aufweist, die sich von den Schultern ausgehend entlang des Oberkörpers eines Kindes erstrecken,
wobei jeder Schultergurt (121, 122) mit einem aufblasbaren Sicherheitselement (141, 142) ausgestattet ist, das sich bei Eintreten eines Schlages mit einer Intensität, die stärker als ein vorgegebener Schwellenwert ist, aufbläst,
**dadurch gekennzeichnet, dass** er über lösbare Verbindungsmittel (15) der besagten aufblasbaren Sicherheitselemente (141, 142) untereinander verfügt.

2. Kleinkindpflegevorrichtung nach Anspruch 1, **dadurch gekennzeichnet, dass** die besagten Verbindungsmittel (15) mindestens zwei biegsame Teile (151, 152) aufweisen, die jeweils über ein erstes Ende an das eine und das andere der besagten aufblasbaren Elemente befestigt sind und am zweiten Ende über zusätzliche Mittel zum Verhaken verfügen, die so ausgelegt sind, dass sie sich quer zwischen den Schultergurten (121, 122) erstrecken, wenn sie miteinander verhakt sind.

3. Kleinkindpflegevorrichtung nach Anspruch 2, **dadurch gekennzeichnet, dass** die besagten biegsamen Teile, wenn sie miteinander verhakt sind, ebenfalls das Halten der Schultergurte im Verhältnis zueinander sicherstellen.

4. Kleinkindpflegevorrichtung nach einem der Ansprüche 1 bis 3, **dadurch gekennzeichnet, dass** die besagten aufblasbaren Sicherheitselemente (141, 142) im Gurtsystem oder in einem auf dieses Gurtsystem aufgebrachte spezifische Teil untergebracht sind.

5. Kleinkindpflegevorrichtung nach einem der Ansprüche 1 bis 3, **dadurch gekennzeichnet, dass** die besagten Schultergurte (121, 122) jeweils eine Manschette (131, 132) tragen, die entlang des Schultergurtes gleitend verschoben werden kann und, dass die besagten aufblasbaren Sicherheitselemente (141, 142) innerhalb der besagten Manschetten (131, 132) untergebracht sind.

6. Kleinkindpflegevorrichtung nach Anspruch 5, **dadurch gekennzeichnet, dass** die besagten Manschetten (131, 132) mindestens eine bewegliche Klappe (43, 44) aufweisen, die eine Aufnahme für eines der besagten aufblasbaren Sicherheitselemente (141, 142) bildet.

7. Kleinkindpflegevorrichtung nach Anspruch 6, **dadurch gekennzeichnet, dass** die besagte bewegliche Klappe oder die besagten beweglichen Klappen (43, 44) miteinander und/oder mit einem anderen Teil der Schultergurte miteinander verbunden sind, über Mittel (45, 46), die so gewählt wurden, dass sie schmelzbar sind und nachgeben, wenn die aufblasbaren Elemente sich aufblasen, ohne deren Entfaltung zu verhindern.

8. Kleinkindpflegevorrichtung nach einem der Ansprüche 5 bis 7, **dadurch gekennzeichnet, dass** jede der besagten aufblasbaren Sicherheitselemente (141, 142) an eine der besagten Manschetten (131, 132) über zwei Verbindungen jeweils in der Nähe der Enden der besagten Manschette befestigt ist.

9. Kleinkindpflegevorrichtung nach einem der Ansprüche 5 bis 8, **dadurch gekennzeichnet, dass** die besagten aufblasbaren Sicherheitselemente (141, 142) an die besagten Manschetten (131, 132) festgenäht sind.

10. Kleinkindpflegevorrichtung nach einem der Ansprüche 5 bis 9, **dadurch gekennzeichnet, dass** jede der besagten Manschetten (131, 132) eine seitliche Öffnung aufweist, die den Durchgang der besagten Verbindungsmittel (15) zulässt.

11. Kleinkindpflegevorrichtung nach einem der Ansprüche 1 bis 10, **dadurch gekennzeichnet, dass** die besagten aufblasbaren Sicherheitselemente (141, 142) so gestaltet sind, dass sie im aufgeblasenen Zustand einen seitlichen Schutz auf der Höhe des Halses des Kindes und ein, ein mittleres Kissen entsprechendes Element, auf der Höhe des Kopfes des Kindes, über ihre durch die Verbindungsmittel (15) verbundenen Enden, bilden.

12. Kleinkindpflegevorrichtung nach einem der Ansprüche 1 bis 11, **dadurch gekennzeichnet, dass** die besagten aufblasbaren Sicherheitselemente (141, 142) auf dem besagten Gurtsystem angebracht sind und so auf der Höhe des Brustkorbes des Kindes gestaltet sind, dass sie sich in etwa unterhalb des Kopfes des Kindes entfalten.

13. Kleinkindpflegevorrichtung nach einem der Ansprüche 1 bis 12, **dadurch gekennzeichnet, dass** eine Verbindung eines jeden aufblasbaren Sicherheitselementes (141, 142) mit dem ihn tragenden Schultergurt des Gurtsystems, beispielsweise durch eine Naht oder eine Bindung, vorhanden ist, um die Entfaltungsrichtung der besagten aufblasbaren Elemente zu steuern.

14. Kleinkindpflegevorrichtung nach einem der Ansprüche 1 bis 13, **dadurch gekennzeichnet, dass** die besagten aufblasbaren Sicherheitselemente (141, 142) Teile eines selben aufblasbaren Kissens sind.

15. Kleinkindpflegevorrichtung nach einem der Ansprüche 1 bis 13, **dadurch gekennzeichnet, dass** die besagten aufblasbaren Sicherheitselemente (141, 142) zwei unabhängige aufblasbare Elemente sind.

16. Kleinkindpflegevorrichtung nach einem der Ansprüche 1 bis 15, **dadurch gekennzeichnet, dass** die besagten aufblasbaren Sicherheitselemente (141, 142) durch mindestens eine Fluidumsquelle (62) versorgt werden.

17. Kleinkindpflegevorrichtung nach Anspruch 16, **dadurch gekennzeichnet, dass** die besagte mindestens eine Fluidumsquelle (62) in der Rückenlehne (61), im Sitz oder im Sockel des besagten Sitzes untergebracht ist.

18. Kleinkindpflegevorrichtung nach einem der Ansprüche 1 bis 17, **dadurch gekennzeichnet, dass** er über mechanische Mittel zum Auslösen des Aufblasens der besagten aufblasbaren Sicherheitselemente (141, 142) verfügt, welche mindestens eine Schmelzsicherung aufweisen, die an den folgenden Stellen angebracht ist bzw. sind:
- auf einer Verbindungszange (72) zwischen dem besagten Autositz mit einem zu diesem Zweck im Kraftfahrzeug vorgesehenen Haken, und/oder
- auf einem Verbindungsgurt (83) zwischen dem oberen Teil der Rückenlehne oder eines entsprechenden Sockels und dem Kraftfahrzeug, oder auf mit dem besagten Gurt zusammenhängende Mittel.

19. Kleinkindpflegevorrichtung nach einem der Ansprüche 1 bis 18, **dadurch gekennzeichnet, dass** er über elektronische Mittel zum Auslösen des Aufblasens der besagten aufblasbaren Sicherheitselemente (141, 142) verfügt, wie mindestens ein Verzögerungsfühler und/oder ein von einem Kraftfahrzeug, in dem der besagte Kindersitz eingesetzt ist, ausgegebenes Befehlssignal.

20. Kleinkindpflegevorrichtung nach einem der Ansprüche 1 bis 19, **dadurch gekennzeichnet, dass** er über Mittel verfügt, welche die Gegenwart eines Kindes feststellen und das Aufblasen der aufblasbaren Sicherheitselemente (141, 142) nur dann zulassen, wenn sich ein Kind in dem Kleinkindpflegevorrichtung befindet.

21. Kleinkindpflegevorrichtung nach den Ansprüchen 2 und 20, **dadurch gekennzeichnet, dass** die besagten Fühler durch die besagten Verbindungsmittel (15) der besagten aufblasbaren Sicherheitselemente (141, 142) untereinander gebildet werden, oder mit diesen Zusammenwirken und die Gegenwart eines Kindes melden, wenn die besagten Mittel zum Verhaken miteinander verbunden sind.

22. Kleinkindpflegevorrichtung nach einem der Ansprüche 1 bis 21, **dadurch gekennzeichnet, dass** es sich um einen Autokindersitz handelt.

23. Kleinkindpflegevorrichtung nach einem der Ansprüche 1 bis 21, **dadurch gekennzeichnet, dass** sie der folgendes umfassenden Gruppe gehören:
- Kinderwagen;
- Kinderkörbe;
- Fahrradsitze.

## Claims

1. Child care device suitable for receiving a child, comprising a harness (12) having two straps (121, 122) designed for extending from the shoulders along a child's chest,
wherein each of the straps (121, 122) is equipped with an inflatable safety element (141, 142), suitable for being inflated in the event of an impact above a predetermined threshold,
**characterised in that** it comprises
means (15) for reversibly attaching said inflatable safety elements (141, 142) together.

2. Child care device according to claim 1, **characterised in that** said attachment means (15) comprise at least two flexible portions (151, 152) attached by a first of the ends thereof to either of said inflatable elements, respectively, and having at the second ends thereof additional coupling means, designed so as to extend transversally between the straps (121, 122), when they are attached.

3. Child care device according to claim 2, **characterised in that** said flexible portions, when the coupling means thereof are attached, also hold the straps together.

4. Child care device according to any of claims 1 to 3, **characterised in that** said inflatable safety elements (141, 142) are arranged in the harness or in a specific piece attached on the harness.

5. Child care device according to any of claims 1 to 3, **characterised in that** said straps (121, 122) both support a sleeve (131, 132), mobile and sliding along the strap, and **in that** said inflatable safety elements (141, 142) are arranged in said sleeves (131, 132).

6. Child care device according to any of claims 1 to 3, **characterised in that** said sleeves (131, 132) have at least one movable flap (43, 44), suitable for forming a housing for one of said inflatable safety elements (141, 142).

7. Child care device according to claim 6, **characterised in that** the mobile flap(s) (43, 44) are coupled with one other and/or with another part of the harness by means (45, 46) chosen so as to be fusible and yielding when the inflatable elements inflate without interfering with the deployment of the latter.

8. Child care device according to any of claims 5 to 7, **characterised in that** each of said inflatable safety elements (141, 142) is attached to one of said sleeves (131, 132) via two connections, in the vicinity of each of the ends of said sleeve, respectively.

9. Child care device according to any of claims 5 to 8, **characterised in that** said inflatable safety elements (141, 142) are attached to said sleeves (131, 132) by stitching.

10. Child care device according to any of claims 5 to 9, **characterised in that** each of said sleeves (131, 132) has a side opening for inserting said attachment means (15).

11. Child care device according to any of claims 1 to 10, **characterised in that** said inflatable safety elements (141, 142) are configured so as to define, when inflated, a lateral protection at the level of the child's neck and the equivalent of a central bag at the level of the child's head, their end portions being connected together by the attachment means (15).

12. Child care device according to any of claims 1 to 11, **characterised in that** said inflatable safety elements (141, 142) are placed on said harness and configured at the level of the child's thorax in order to deploy roughly below the child's head.

13. Child care device according to any of claims 1 to 12, **characterised in that** an attachment of each inflatable safety element (141, 142) to the harness strap that carries it, for example by the intermediary of a stitching or a link, is provided, in order to control the direction of the deployment of said inflatable elements.

14. Child care device according to any of claims 1 to 13, **characterised in that** said inflatable safety elements (141, 142) are parts of the same inflatable bag.

15. Child care device according to any of claims 1 to 13, **characterised in that** said inflatable safety elements (141, 142) are two independent inflatable elements.

16. Child care device according to any of claims 1 to 15, **characterised in that** said inflatable safety elements (141, 142) are supplied with at least one source of fluid (62).

17. Child care device according to claim 16, **characterised in that** said at least one source of fluid (62) is housed in the back section (61), the bottom section or the base of said seat.

18. Child care device according to any of claims 1 to 17, **characterised in that** it comprises mechanical means for activating the inflation of said inflatable safety elements (141, 142), comprising at least one fuse mounted:
- on a clip (72) for attaching said car seat to a hook provided for this purpose in a motor vehicle; and/or
- on a strap (83) for attaching the upper part of the back section, or a corresponding base, to the motor vehicle, or on means rigidly connected to said strap.

19. Child care device according to any of claims 1 to 18, **characterised in that** it comprises electronic means for activating the inflation of said inflatable safety elements (141, 142), such as at least one deceleration sensor and/or a control signal output by a vehicle wherein said device is fitted.

20. Child care device according to any of claims 1 to 19, **characterised in that** it comprises means for detecting the presence of a child, only authorising the inflation of the inflatable safety elements (141, 142) in the presence of a child in said child care device.

21. Child care device according to claims 2 and 20, **characterised in that** said detection means are formed by or engage with said means (15) for attaching said inflatable safety elements (141, 142) together, and output information relating to the presence of a child when said coupling means are attached.

22. Child care device according to any of claims 1 to 21, **characterised in that** the device is a car seat for a child.

23. Child care device according to any of claims 1 to 21, **characterised in that** the device belongs to a group comprising:
- strollers;
- carrycots;
- child seats for bicycles.
